(19) **Europäisches Patentamt**

**European Patent Office**

**Office européen des brevets**

(11) **EP 1 036 442 B1**

(12) **FASCICULE DE BREVET EUROPEEN**

(45) Date de publication et mention
de la délivrance du brevet:
**28.01.2004 Bulletin 2004/05**

(21) Numéro de dépôt: **98955643.6**

(22) Date de dépôt: **13.11.1998**

(51) Int Cl.⁷: **H04J 3/16**

(86) Numéro de dépôt international:
**PCT/FR1998/002416**

(87) Numéro de publication internationale:
**WO 1999/029060 (10.06.1999 Gazette 1999/23)**

(54) **TRAME NUMERIQUE POUR STATION HERTZIENNE**

DIGITALES RAHMEN FÜR EIN RICHTFUNKÜBERTRAGUNGSSTATION

DIGITAL FRAME FOR RADIO-RELAY STATION

(84) Etats contractants désignés:
**BE DE ES FI GB IT SE**

(30) Priorité: **02.12.1997 FR 9715270**

(43) Date de publication de la demande:
**20.09.2000 Bulletin 2000/38**

(73) Titulaire: **SAGEM S.A.**
**75015 Paris (FR)**

(72) Inventeur: **FORCE, Claude**
**F-91800 Brunoy (FR)**

(74) Mandataire: **Cabinet Martinet & Lapoux**
**43, Boulevard Vauban,**
**B.P. 405,**
**Guyancourt**
**78055 St. Quentin Yvelines Cedex (FR)**

(56) Documents cités:
EP-A- 0 073 043      US-A- 3 988 544
US-A- 4 631 720      US-A- 4 965 796

**Description**

La présente invention concerne une trame numérique ayant une longueur prédéterminée exprimée en bits, résultant du multiplexage de signaux numériques plésiochrones, ainsi qu'un procédé pour former une telle trame.

L'invention est particulièrement mise en oeuvre dans une station hertzienne qui comprend un équipement transmetteur et récepteur essentiellement numérique, situé à la base de la station, et un équipement d'émission et de réception à radiofréquence situé par exemple sur le sommet d'un bâtiment ou d'un pylône et relié par câble de transmission au premier équipement.

Un groupe de signaux numériques plésiochrones ayant des débits normalisés par exemple à 2,048 Mbit/s ou 8,448 Mbit/s est appliqué à l'équipement transmetteur et récepteur qui les multiplexe en une trame particulière. A chaque groupe de signaux plésiochrones correspond une station hertzienne particulière.

Toutefois, les exploitants de faisceaux hertziens sont de plus en plus confrontés à optimiser leurs stations hertziennes pour les adapter à l'évolution des demandes des clients. Pour un faisceau hertzien donné, si par exemple les stations échangeant un signal multiplex à 2 x 2 Mbit/s doivent échanger un signal multiplex à 4 x 2 Mbits/s ou à 8 Mbit/s, de nombreux circuits doivent être modifiés et changés dans toutes les stations pour les adapter aux caractéristiques notamment de débit et de trame du nouveau signal multiplex à transmettre.

Le document US-A-4 965 796 décrit des multiplexages à division de temps de signaux numériques ayant des débits différents dans une trame numérique ayant une durée et un débit constants.

La présente invention vise à réduire le coût d'une station hertzienne en y introduisant des circuits qui sont sélectionnables et programmables en fonction du débit du signal résultant du multiplexage d'un groupe quelconque de signaux plésiochrones sélectionné parmi plusieurs groupes de signaux plésiochrones à multiplexer susceptibles d'être transmis, afin que la station hertzienne soit exploitable quel que soit le débit du signal résultant correspondant au groupe sélectionné. Plus particulièrement, l'invention fournit une trame numérique ayant une longueur prédéterminée qui contribue à atteindre cet objectif et qui est destinée au transport des débits différents de signaux résultant du multiplexage de signaux numériques plésiochrones.

A cette fin, une trame numérique ayant une longueur prédéterminée résultant du multiplexage de signaux numériques plésiochrones, est caractérisée par une longueur constante et une structure indépendantes des débits de signaux résultant chacun du multiplexage de signaux numériques plésiochrones constituant un groupe sélectionné parmi plusieurs groupes de signaux numériques plésiochrones ayant des débits sensiblement multiples entre eux, les débits des signaux résultants étant des sous-multiples entiers du plus grand débit des signaux résultants.

La structure de la trame est ainsi constante quel que soit le débit du signal résultant du multiplexage. Comme on le verra dans la description ultérieure de réalisations préférées de l'invention, les mêmes circuits dans des moyens d'émission et de réception d'une station hertzienne sont seulement programmables en fonction du débit du signal résultant.

La trame numérique de l'invention permet de transmettre également des informations supplémentaires de service en réservant à certaines d'entre elles un débit minimal.

Plus précisément, la trame comporte un mot de verrouillage, un champ de bits de signaux multiplexés et un champ de bits supplémentaires qui ont des longueurs respectives prédéterminées. Le rapport des débits du signal résultant comportant la trame et d'un signal multiplex sélectionné obtenu sensiblement directement par multiplexage des signaux plésiochrones du groupe sélectionné est constant et indépendant des débits des signaux multiplex.

Le champ de bits supplémentaires peut comprendre un champ d'affectation constante, un champ dont l'affectation est variable en fonction du débit du signal multiplex sélectionné, et un champ de code correcteur d'erreurs, lesdits champs ayant des longueurs respectives prédéterminées.

Le champ d'affectation constante comprend par exemple des bits de collecte d'informations d'erreurs et/ou des bits de qualité.

Le champ d'affectation variable peut comprendre des bits de voies auxiliaires dont les débits offerts sont d'autant plus élevés que le débit du signal multiplex sélectionné est élevé. Le champ d'affectation variable peut également comprendre des bits qui sont réservés à un nombre prédéterminé de voies de transmission téléphonique et/ou de données et qui sont en nombre d'autant plus faible que le débit du signal multiplex sélectionné est élevé. Le champ d'affectation variable peut comprendre encore des bits assignés à une voie de service téléphonique qui sont en nombre d'autant plus faible que le débit du signal multiplex sélectionné est élevé ; le champ d'affectation constante comprend alors un bit signalant un appel dans la voie de service téléphonique.

L'invention concerne également un procédé pour former la trame numérique définie ci-dessus. Il est caractérisé par les étapes suivantes : constituer des groupes de signaux numériques plésiochrones parmi plusieurs signaux numériques plésiochrones donnés ayant des débits sensiblement multiples entre eux, sélectionner l'un des groupes de signaux numériques plésiochrones, multiplexer les signaux numériques plésiochrones dans le groupe sélectionné en un signal multiplex sélectionné, les signaux multiplex résultant respectivement du multiplexage des signaux numériques plésiochrones dans les groupes ayant des débits multiples entre eux, répartir les bits du signal multiplex sélectionné dans un champ de longueur prédéterminée dans la trame après multiplication du débit du signal multiplex sélectionné par une constante, et former un signal résultant ayant ladite trame par insertion dans celle-ci d'un mot de verrouillage et d'un champ de bits supplémentaires ayant des longueurs prédéterminées.

Lorsque le signal résultant doit être transmis à travers un support de transmission à débit prédéterminé, tel que le câble de transmission entre les équipements d'une station hertzienne, le débit du signal résultant est au plus égal au débit constant dans le support de transmission, et le signal résultant est suréchantillonné avec un rapport de suréchantillonnage entre le débit de support de transmission et le débit du signal résultant de manière à transmettre un signal suréchantillonné au débit constant dans le support de transmission, quel que soit le débit du signal résultant sélectionné et donc quel que soient les débits des signaux numériques plésiochrones du groupe sélectionné.

Dans une station hertzienne où le support de transmission, tel que câble, relie un équipement transmetteur et récepteur à la base de la station hertzienne et un équipement d'émission et de réception à radiofréquence de la station hertzienne, le procédé comprend dans l'équipement à radiofréquence, une étape de sous-échantillonner le signal suréchantillonné avec l'inverse du rapport de suréchantillonnage et une étape de sélectionner des filtres de fréquence en fonction du rapport de suréchantillonnage. La largeur des bandes de fréquence des filtres sélectionnés augmente avec le débit du signal résultant.

Bien souvent, en pratique, les débits DE1 et DE2 de premiers et deuxièmes signaux numériques plésiochrones sont liés par la relation $DE2 \approx N.DE1$, et les signaux multiplex ont des débits sensiblement supérieurs à $P.DE2$, N et P étant des entiers égaux ou supérieurs à zéro. Dans ce cas, les étapes de sélectionner un groupe et multiplexer des signaux numériques plésiochrones dans le groupe sélectionné comprennent des étapes de sélectionner et multiplexer $N(2^{K-k}-P)$ signaux au débit DE1 en $(2^{K-k}-P)$ signaux multiplex intermédiaires au débit DE2, sélectionner P signaux numériques plésiochrones au débit DE2, et multiplexer les P signaux numériques plésiochrones sélectionnés au débit DE2 et les $(2^{K-k}-P)$ signaux multiplex intermédiaires en le signal multiplex sélectionné, P étant un entier compris entre 0 et $2^{(K-k)}$ et k un entier compris entre 0 et K.

Selon un autre aspect du procédé de l'invention, l'insertion du champ de bits supplémentaires dans la trame comprend des insertions d'un champ d'affectation constante, d'un champ d'affectation variable en fonction du débit du signal multiplex sélectionné, et d'un champ de code correcteur d'erreurs, lesdits champs ayant des longueurs respectives prédéterminées.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'une station hertzienne émettant une trame selon l'invention ;
- la figure 2 est un bloc-diagramme schématique d'un dispositif de multiplexage inclus dans un équipement transmetteur et récepteur de la station hertzienne particulièrement pour la mise en oeuvre du procédé de formation de trame selon l'invention ;
- les figure 3 à 6 sont des blocs-diagrammes schématiques de différents circuits de multiplexage pouvant être inclus dans l'équipement transmetteur de base ;
- les figure 7 à 9 montrent respectivement des trames pour des signaux multiplex produits dans les circuits de multiplexage ;
- la figure 10 montre une trame hertzienne selon l'invention produite par l'équipement transmetteur et récepteur ;
- les figures 11 à 13 montrent la composition de champs d'affectation variable respectivement pour des modes de fonctionnement différents correspondant à des multiplexages différents ; et
- la figure 14 montre une structure de trame d'une voie auxiliaire dans un signal résultant à débit maximal.

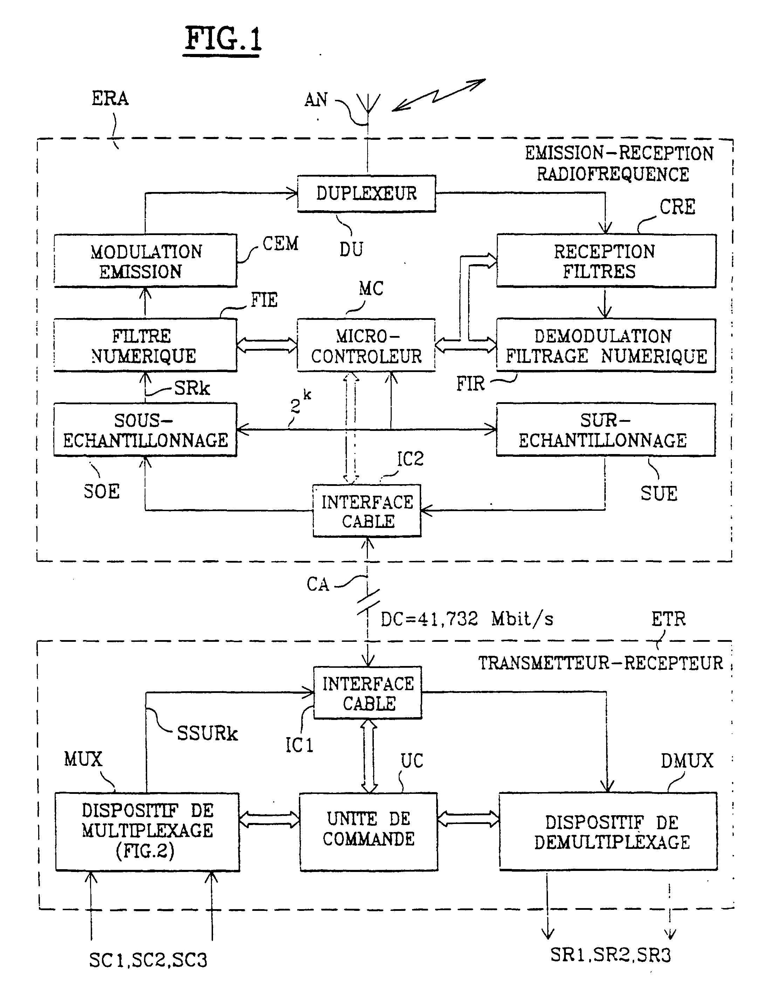

En référence à la figure 1, une station de liaison hertzienne comprend essentiellement un équipement transmetteur et récepteur de station ETR généralement installé à l'intérieur d'un bâtiment et un équipement d'émission et de réception à radiofréquence ERA situé soit sur le toit du bâtiment, soit sur un pylône à proximité du bâtiment. Les équipements sont reliés par un câble coaxial CA pour transmission bidirectionnelle ayant une longueur qui peut atteindre quelques centaines de mètres.

Le premier équipement ETR multiplexe à division du temps des signaux numériques plésiochrones composants SC1, SC2, SC3 en un signal résultant ayant une trame "hertzienne" selon l'invention à transmettre dans le câble CA avec un débit constant DC. Le deuxième équipement ERA génère un signal hyperfréquence à quelques gigahertz modulé par le signal résultant issu de l'équipement ETR pour l'émettre à travers une antenne AN. Les équipements ETR et ERA assurent également la réception d'un signal à haute fréquence contenant une trame hertzienne selon l'invention et le démultiplexage de celui-ci en des signaux numériques plésiochrones.

Selon la réalisation illustrée à la figure 1, le premier équipement ETR comprend essentiellement un dispositif de multiplexage numérique MUX et un dispositif de démultiplexage numérique DMUX, une interface IC1 avec le câble CA, et une unité de commande à microprocesseur UC avec clavier. Le deuxième équipement ERA comprend essentiellement une interface IC2, un circuit de modulation et d'émission à haute fréquence CEM, un circuit de sous-échantillonnage SOE entre la sortie de l'interface IC2 et un filtre numérique programmable d'émission FIE précédant le circuit CEM, un circuit de réception à haute fréquence CRE, un duplexeur DU entre les circuits CEM et CRE et une antenne AN, un circuit de suréchantillonnage SUE entre un circuit de démodulation et filtrage numérique FIR succédant au circuit CRE et l'interface IC2, ainsi qu'un microcontrôleur MC. Comme on le verra dans la suite de la description, les modifications apportées par l'invention sont concentrées essentiellement dans les dispositifs de multiplexage et démultiplexage numériques MUX et DMUX, et dans une moindre mesure, dans l'équipement radio ERA au niveau des ensembles de circuits SOE-CEM et CRE-SUE.

La suite de la description présente en détail la constitution d'une trame numérique dans le dispositif de multiplexage MUX selon l'invention en fonction de valeurs numériques de débit, durée, fréquence et longueur exprimée en nombre de bits, indiquées à titre d'exemple.

Dans l'équipement transmetteur et récepteur ETR à la base de la station de liaison hertzienne, le dispositif de multiplexage MUX est susceptible de recevoir des signaux numériques plésiochrones composants SC1, SC2, SC3 ayant des débits normalisés à DE1 = 2,048 Mbit/s, DE2 = 8,448 Mbit/s et DE3 = 34, 368 Mbit/s, c'est-à-dire ayant des débits sensiblement multiples entiers entre eux, puisque $DE3 \approx 4.DE2$ et $DE2 \approx 4. DE1$. Le débit DC dans le câble CA est constant et égal à 41,732 Mbit/s, ce qui impose, comme on le verra dans la suite, que la somme des débits des signaux plésiochrones à multiplexer ensemble, entrant dans l'équipement ETR, soit inférieure ou égale au débit maximum entrant DE3 = 34,368 Mbit/s.

La structure de trame selon l'invention transmise dans le câble CA est commune à quatre modes de fonctionnement M0 à M3 qui correspondent respectivement à des nombres de signaux plésiochrones au plus petit débit à 2,048 Mbit/s égaux aux quatre premières puissances de 2. Aux modes de fonctionnement correspondent respectivement des groupes de signaux plésiochrones dans le tableau 1 ci-après :

TABLEAU 1

|  | MODE | GROUPES |
|---|---|---|
| M3 | 2x2 Mbit/s | 2 x 2,048 Mbit/s |
| M2 | 4x2 Mbit/s | 4 x 2,048 Mbit/s |
|  |  | 8,448 Mbit/s |
| M1 | 8x2 Mbit/s | 8 x 2,048 Mbit/s |
|  |  | 4 x 2,048 + 8,448 Mbit/s |
|  |  | 2 x 8,448 Mbit/s |
| M0 | 16 x 2 Mbit/s | 16 x 2,048 Mbit/s |
|  |  | 12 x 2,048 Mbit/s + 8,448 Mbit/s |
|  |  | 8 x 2,048 Mbit/s + 2 x 8,448 Mbit/s |
|  |  | 4 x 2,048 Mbit/s + 3 x 8,448 Mbit/s |
|  |  | 4 x 8 Mbit/s |
|  |  | 34,368 Mbit/s |

Ainsi, au minimum deux signaux multiplexés SC1 à 2,048 Mbit/s, ou un signal SC2 à 8,448 Mbit/s, ou un signal SC3 à 34,368 Mbit/s sont transmis, et au maximum seize signaux SC1 à 2,048 Mbit/s, ou quatre signaux SC2 à 8,448 Mbit/s sont multiplexés et transmis. Le dispositif de multiplexage comprend ainsi au plus seize entrées pour des signaux SC1, quatre entrées pour des signaux SC2 et une entrée pour un signal SC3.

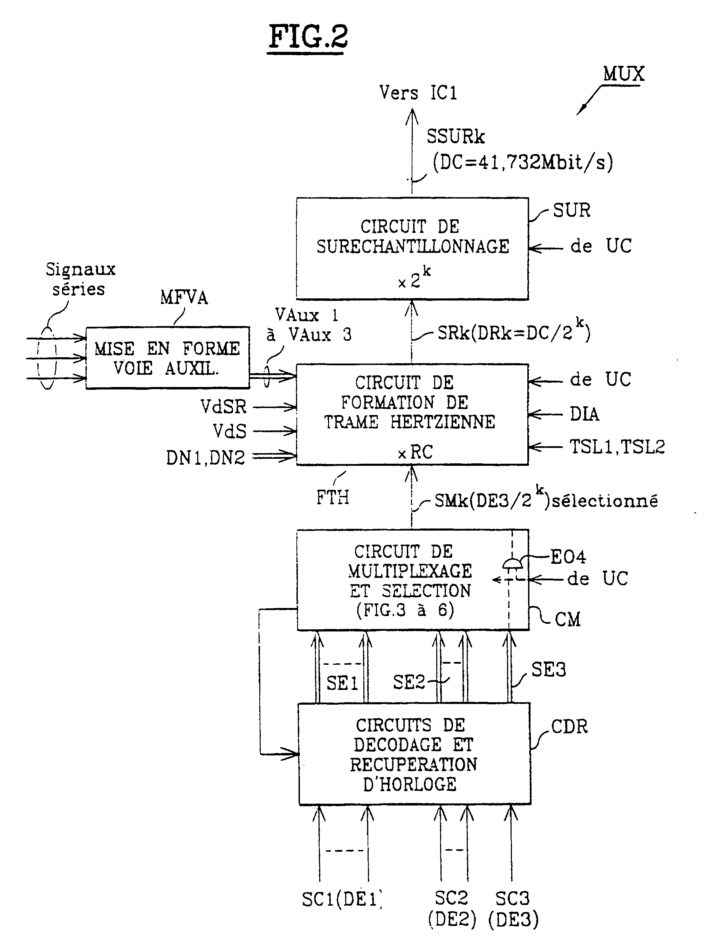

Comme montré à la figure 2, le dispositif de multiplexage numérique MUX comprend essentiellement des circuits de décodage et de récupération d'horloge CDR, des circuits de multiplexage et sélection CM, un circuit de formation de trame hertzienne FTH, et un circuit de suréchantillonnage SUR.

Les circuits de décodage et de récupération d'horloge CDR convertissent respectivement les signaux plésiochrones SC1, SC2, SC3 en code de ligne en des signaux binaires plésiochrones entrants SE1 à SE3 et récupèrent des signaux d'horloge correspondant aux débits de ces signaux. Le code en ligne est par exemple un code bipolaire tel que le code HDB3. Les signaux d'horloge récupérés correspondent aux débits réels des signaux plésiochrones et varient dans des limites spécifiques de part et d'autre des débits nominaux DE1 = 2,048 Mbit/s, DE2 = 8,448 Mbit/s et DE3 = 34,368 Mbit/s, en raison d'une indépendance des horloges initiales des signaux plésiochrones.

Dans les circuits de multiplexage et sélection CM, avant de procéder au multiplexage proprement dit, les signaux plésiochrones entrants sont synchronisés en des signaux composants justifiés ayant respectivement des débits sensiblement supérieurs aux débits nominaux précités. Puis les signaux justifiés synchrones sont multiplexés progressivement par l'intermédiaire d'un ou de deux multiplexeurs en des signaux multiplexés SM3 à SM0 correspondant aux débits des modes M3 à M0. Le nombre de signaux plésiochrones sélectionnés entrants à 2 Mbit/s ou à 8 Mbit/s est choisi ainsi de manière à atteindre progressivement les débits normalisés et les débits des modes de fonctionnement dès que le nombre de signaux entrants le permet. Les signaux multiplex SM3 à SM0 produits par les circuits de multiplexage et sélection CM ont des débits DM3/$2^k$ qui sont des sous-multiples entiers du débit normalisé maximal DE3 = 34,368 Mbit/s. L'entier k varie de 0 à 3 pour les modes M0 à M3. La fonction de multiplexage est ainsi compatible avec tous les groupes de signaux plésiochrones des différents modes indiqués dans le tableau 1 et avec la structure constante de trame hertzienne exposée plus loin.

En pratique, le débit du signal multiplex produit par l'un des circuits de multiplexage et sélection CM dépend d'une part, d'une insertion systématique de bits d'un mot de verrouillage et de bits d'indication de justification en nombre prédéterminé par trame du signal résultant du multiplexage, et d'autre part d'une insertion de bits de justification positive afin de combler la différence entre le débit constant plus élevé du signal multiplex et le débit de chaque signal entrant à multiplexer. Comme il est connu, chaque trame du signal multiplex est divisée en plusieurs secteurs, de 2 à 4 en général, les secteurs ayant une longueur prédéterminée. Dans la suite, les longueurs de trame et de secteur ou de mot sont exprimées en bit.

Chaque secteur comprend un en-tête incluant des bits du mot de verrouillage de trame MV et des bits d'indication de justification IJ respectivement associés aux signaux plésiochrones multiplexés. Le premier secteur de la trame suivante comprend essentiellement après l'en-tête, des bits de justification BJ respectivement associés aux bits des signaux plésiochrones multiplexés dans la trame précédente. Les autres bits dans chacun des secteurs sont des bits d'information utile des signaux plésiochrones qui sont multiplexés bit à bit.

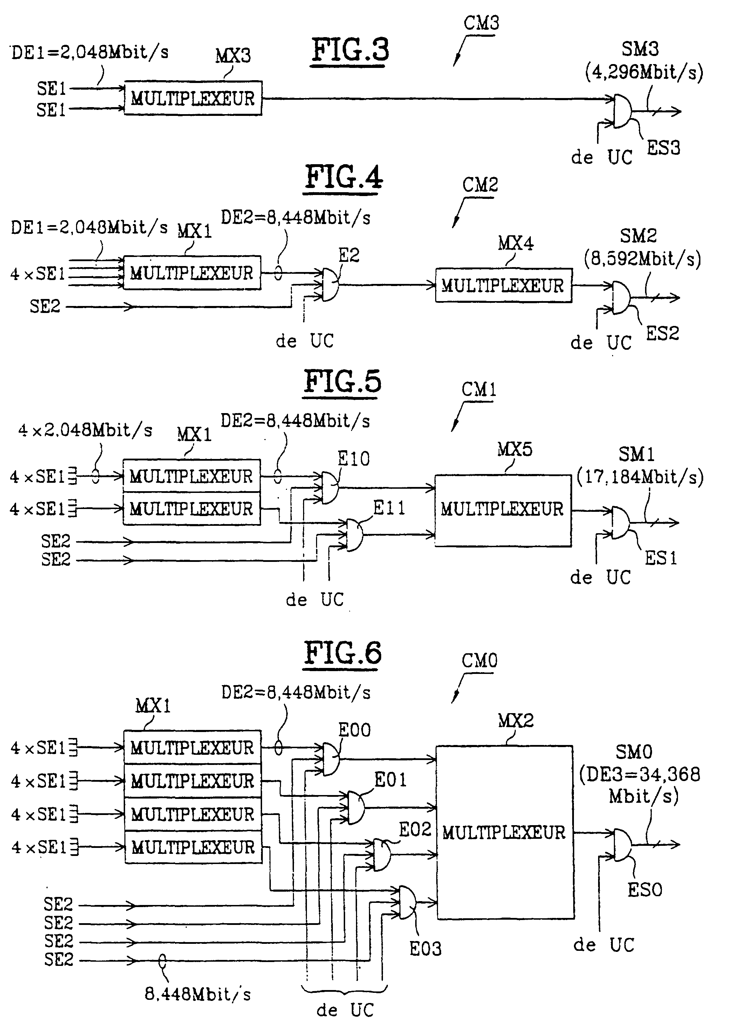

Les figures 3 à 6 montrent respectivement des blocs-diagrammes de circuits de multiplexage et sélection CM3 à CM0 désignés ci-dessous par CM est inclus dans le dispositif de multiplexage MUX pour les quatre modes de fonctionnement M3 à M0 afin de produire le signal multiplex correspondant à l'un sélectionné de tous les groupes définis dans le tableau 1. Les circuits de multiplexage et sélection contiennent des multiplexeurs qui accomplissent chacun la fonction de synchronisation avec justification des signaux plésiochrones entrants respectifs, et la fonction de multiplexage des signaux justifiés respectifs avec formation d'une trame correspondante. Les multiplexeurs sont répartis en deux catégories, une première catégorie de multiplexeurs connus et une deuxième catégorie de multiplexeurs propres à la réalisation décrite. Les multiplexeurs connus sont un multiplexeur MX1 selon la recommandation G.742 de l'UIT-T pour multiplexer quatre signaux plésiochrones au débit nominal de DE1 = 2,048 Mbit/s en un signal multiplex au débit normalisé de DE2 = 8,448 Mbit/s, et un second multiplexeur MX2 selon la recommandation G.751 de l'UIT-T pour multiplexer quatre signaux plésiochrones au débit de DE2 = 8,448 Mbit/s en un signal multiplex au débit normalisé de 34,368 Mbit/s.

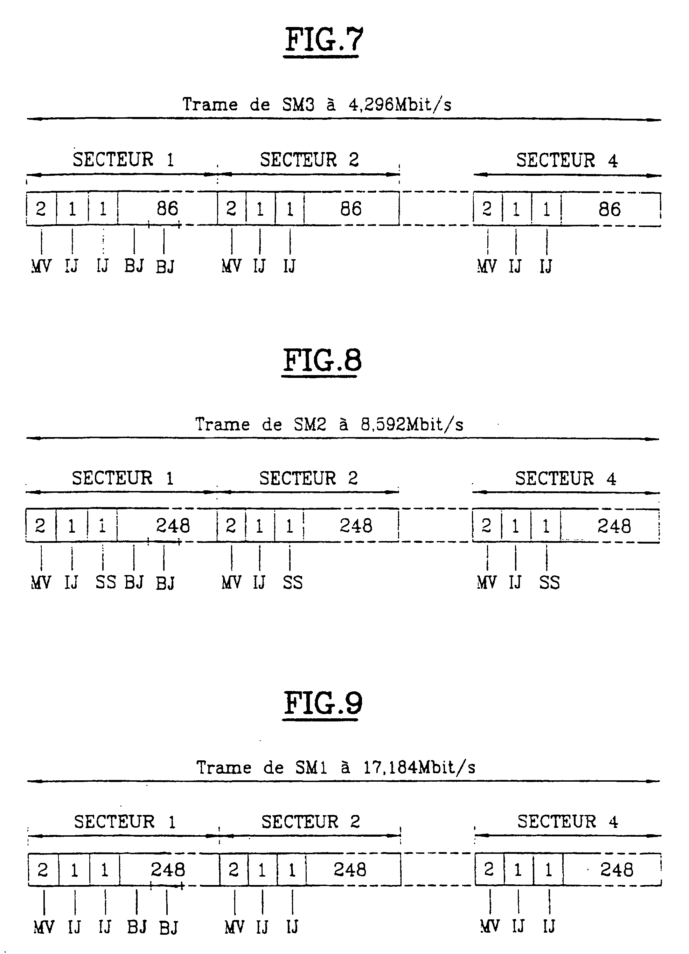

Pour le mode de fonctionnement M3, le circuit de multiplexage et sélection CM3 comprend un seul multiplexeur MX3 pour multiplexer deux signaux plésiochrones entrants au débit DE1 = 2,048 Mbit/s en un signal multiplex SM3 au débit de DE3/8 = 4,296 Mbit/s, comme montré à la figure 3. Les caractéristiques de la trame du signal multiplex SM3 sont indiquées dans le tableau 2 ci-après, en référence à la figure 7 :

TABLEAU 2

| Caractéristiques | Multiplexeur MX3 |
|---|---|
| Débit de SE1 (Mbit/s) | DE1 = 2,048 |
| Nombre de SE1 | 2 |
| Débit résultant (Mbit/s) | 4,296 |
| Fréquence trame (kHz) | 11,933 |
| Longueur de trame (bits) | 360 |
| Nombre de secteurs | 4 |
| Composition des secteurs :<br>- bits d'informations utiles<br>- bits supplémentaires | <br>86<br>4 |
| Affectation des bits de la trame<br>- 2 signaux SE1<br>- Verrouillage de Trame MV | <br>2 x 172<br>8 |

TABLEAU 2   (suite)

| Caractéristiques | Multiplexeur MX3 |
|---|---|
| - Indication de Justification IJ | 2 x 4 |
| Justification par SE1 :<br>- IJ<br>- bit de justification BJ<br>- taux de justification minimal<br>- taux de justification nominal<br>- taux de justification maximal | <br>4<br>1<br>0,368<br>0,38<br>0,392 |

Pour le mode de fonctionnement M2, le circuit de multiplexage et sélection CM2 comprend un premier multiplexeur MX1 pour multiplexer quatre signaux plésiochrones entrants SE2 au débit DE1 = 2,048 Mbit/s en un signal multiplex intermédiaire au débit DE2 = 8,448 Mbit/s, et un multiplexeur MX4 pour élever le debit normalisé de 8,448 Mbit/s au débit DE3/4 = 8,592 Mbit/s d'un signal multiplex SM2, comme montré à la figure 4. En pratique, le multiplexeur MX4 est un circuit de formation de trame, comme celle montrée à la figure 8, de manière à insérer dans des en-têtes de quatre secteurs deux bits de mot de verrouillage de trame MV, un bit d'indication de justification IJ, un bit sans signification SS, et pour le premier secteur deux bits de justification BJ. Les caractéristiques de la trame dans le signal multiplex SM2 sont indiquées dans le tableau 3 ci-après, en référence à la figure 8 :

TABLEAU 3

| Caractéristiques | Multiplexeur MX4 |
|---|---|
| Débit de SE2 (Mbit/s) | DE2 = 8,448 |
| Nombre de SE2 | 1 |
| Débit résultant (Mbit/s) | 8,592 |
| Fréquence trame (kHz) | 8,523 |
| Longueur de trame (bits) | 1008 |
| Nombre de secteurs | 4 |
| Composition des secteurs :<br>- bits d'informations utiles<br>- bits supplémentaires | <br>248<br>4 |
| Affectation des bits de la trame :<br>- 1 signal SE2<br>- Verrouillage de Trame MV<br>- Indication de Justification IJ<br>- Bits libres | <br>992<br>8<br>4<br>4 |
| Justification pour SE2 :<br>- IJ<br>- bit de justification BJ<br>- taux de justification minimal<br>- taux de justification nominal<br>- taux de justification maximal | <br>4<br>2<br>0,422<br>0, 447<br>0,472 |

Entre la sortie du multiplexeur MX1 et l'entrée du multiplexeur MX4 est inséré un circuit ET E2 qui sélectionne l'un des deux groupes du mode M2. Le circuit ET E2 relie la sortie du multiplexeur MX1 à l'entrée du multiplexeur MX4 lorsque quatre signaux plésiochrones entrants SE1 au débit de DE1 = 2,048 Mbit/s sont à multiplexer, et applique directement un signal entrant SE2 au débit de 8,448 Mbit/s à l'entrée du multiplexeur MX4 lorsqu'un tel signal entrant est seulement à transmettre par la station hertzienne.

Pour le mode de fonctionnement M1, le circuit de multiplexage et sélection CM1 comprend deux multiplexeurs MX1 et un multiplexeur MX5 spécifique à l'invention, comme montré à la figure 5. Chacun des deux multiplexeurs MX0 multiplexe quatre signaux plésiochrones entrants SE1 au débit DE1 = 2,048 Mbit/s en un signal multiplex intermédiaire au débit de DE2 = 8,448 Mbit/s. Le multiplexeur MX5 multiplexe deux signaux plésiochrones entrants SE2 au débit normalisé de DE2 = 8,448 Mbit/s en un signal multiplex SM1 au débit de DE3/2 = 17,184 Mbit/s. La structure de la trame dans le signal SM1 a les caractéristiques indiquées dans le tableau 4 ci-après et comprend, comme dans la trame du signal SM2, quatre secteurs montrés à la figure 9 :

TABLEAU 4

| Caractéristiques | Multiplexeur MX5 |
|---|---|
| Débit de SE2 (Mbit/s) | DE2 = 8,448 |
| Nombre de SE2 | 2 |
| Débit résultant (Mbit/s) | 17,184 |
| Fréquence trame (kHz) | 17,047 |
| Longueur de trame (bits) | 1008 |
| Nombre de secteurs | 4 |
| Composition des secteurs : <br> - bits d'informations utiles <br> - bits supplémentaires | <br> 248 <br> 4 |
| Affectation des bits de la trame : <br> - 2 signaux SE2 <br> - Verrouillage de Trame MV <br> - Indication de Justification IJ | <br> 2 x 496 <br> 8 <br> 2 x 4 |
| Justification par SE2 : <br> - IJ <br> - bit de justification BJ <br> - taux de justification minimal <br> - taux de justification nominal <br> - taux de justification maximal | <br> 4 <br> 1 <br> 0,422 <br> 0,447 <br> 0,472 |

Le circuit de multiplexage et sélection CM1 pour le mode M1 comprend également deux circuits ET E10 et E11. Chacun des deux circuits E10 et E11 applique soit le signal multiplex intermédiaire au débit de 8,448 Mbit/s sortant de l'un respectif des multiplexeurs MX1, soit un signal plésiochrone entrant SE2 au débit de 8,448 Mbit/s, à l'une respective des deux entrées du multiplexeur MX5. Lorsque le groupe de huit signaux SE1 à 2,048 Mbit/s est sélectionné, les circuits ET E10 et E11 relient les sorties des deux multiplexeurs MX1 aux entrées du multiplexeur MX5. Lorsque le deuxième groupe du mode M1 comprenant quatre signaux entrants SE1 à 2,048 Mbit/s et un signal entrant SE2 à 8,448 Mbit/s est sélectionné dans le circuit CM1, l'un des circuits ET E10 et E11 relie un multiplexeur MX1 à une entrée de multiplexeur MX5, et l'autre circuit applique le signal entrant à 8,448 Mbit/s à l'autre entrée du multiplexeur MX5. Lorsque le groupe de deux signaux entrants SE2 à 8,448 Mbit/s est appliqué au circuit CM1, les circuits ET E10 et E11 appliquent directement les deux signaux SE2 aux entrées du multiplexeur MX5.

Pour le mode de fonctionnement M0, le circuit de multiplexage et sélection CM0 comprend quatre premiers multiplexeurs MX1 et un deuxième multiplexeur MX2, comme montré à la figure 6. Les multiplexeurs MX1 peuvent simultanément multiplexer chacun quatre signaux plésiochrones entrants SE1 au débit DE1 = 2,048 Mbit/s pour produire quatre signaux multiplex intermédiaires au débit normalisé de DE2 = 8,448 Mbit/s qui sont appliqués aux quatre entrées du multiplexeur MX2, lorsque le groupe à 16 signaux plésiochrones entrants à 2 Mbit/s est sélectionné ; dans ce cas, quatre circuits ET E00 à E03 relient les sorties des multiplexeurs MX1 aux entrées du multiplexeur MX2. D'autres bornes des circuits ET E00 à E03 sont propres à recevoir quatre signaux plésiochrones entrants SE2 au débit normalisé de DE2 = 8,448 Mbit/s pour les multiplexer dans le multiplexeur MX1, lorsque le groupe avec quatre tels signaux plésiochrones entrants est sélectionné.

Les autres groupes du mode M0 sont sélectionnés de la manière suivante. Pour le groupe à douze signaux entrants SE1 au débit de 2,048 Mbit/s et à un signal entrant SE2 au débit de 8,448 Mbit/s, par exemple les trois circuits ET E00, E01 et E02 relient trois multiplexeurs MX1 à trois entrées du multiplexeur MX2, et le circuit ET E03 applique le signal SE2 à la quatrième entrée du multiplexeur MX1. Lorsque le troisième groupe du mode M0 est sélectionné et par conséquent huit signaux entrants SE1 au débit de 2,048 Mbit/s et deux signaux entrants SE2 au débit de 8,448 Mbit/s doivent être multiplexés, par exemple les circuits ET E00 et E01 relient deux multiplexeurs MX1 à deux entrées du multiplexeur MX2, et les circuits ET E02 et E03 appliquent directement les deux signaux SE2 aux deux autres entrées du multiplexeur MX2. Lorsque le quatrième groupe à quatre signaux entrants SE1 au débit de 2,048 Mbit/s et trois signaux entrants SE2 au débit de 8,448 Mbit/s est sélectionné, par exemple le circuit ET E00 relie un multiplexeur MX1 à une entrée du multiplexeur MX2, et les trois autres circuits ET E01, E02 et E03 appliquent les signaux SE2 aux trois autres entrées du multiplexeur MX2.

De manière générale, le débit d'un signal multiplex SM2 à SM0 est de la forme 4 ($2^{2-k}$-P). DE1 + P.DE2 avec P compris entre 0 et $2^{2-k} \leq 4$ avec k = 0, 1 ou 2.

Lorsqu'un seul signal entrant SE3 au débit de 34,368 Mbit/s est appliqué au relais hertzien, le circuit de décodage et de récupération d'horloge correspondant l'applique au circuit de formation de trame FTH seulement à travers un circuit ET E04 ouvert par l'unité UC (figure 2).

La sortie de chaque circuit de multiplexage et sélection CM3 à CM0 est reliée à l'entrée du circuit de formation de trame FTH par un circuit de sortie ET ES3 à ES0 commandé par l'unité de commande UC qui commande également les circuits ET intermédiaires E2, E10, E11 et E00 à E03. En fonction du mode Mk et du groupe sélectionné, dont les caractéristiques sont saisies par clavier dans l'unité de commande UC, les circuits ET sélectionnent les signaux plésiochrones entrants à multiplexer du groupe sélectionné et fournissent le signal multiplex SM1 à SM4 correspondant au groupe sélectionné à l'entrée du circuit FTH.

Afin de réduire les coûts de la fonction de multiplexage, les circuits de multiplexage et sélection CM3 et CM2 et les circuits de multiplexage et sélection CM1 et CM0 sont supportés respectivement sur deux cartes de circuit imprimé qui sont enfichables dans le châssis de l'équipement transmetteur et récepteur ETR. Ces cartes peuvent supporter également des circuits de démultiplexage correspondants inclus dans le dispositif de démultiplexage DMUX. L'une ou les deux cartes sont alors enfichées dans l'équipement ETR en fonction des besoins. En variante, dans la deuxième carte, les circuits de multiplexage et sélection CM1 et CM0 sont de préférence combinés pour supprimer les deux multiplexeurs MX1 dans le circuit CM1, en introduisant quatre circuits d'aiguillage commandés par l'unité UC depuis les sorties de deux multiplexeurs MX1 et deux entrées de signal SE2 dans le circuit CM0 et vers les circuits ET E10 et E11 et par exemple les circuits ET E00 et E01.

De manière à conserver les rapports entiers 2 avec k = 0 à 3 entre le débit maximal DE3 = 34,368 Mbit/s des signaux multiplex SM0 à SM3 et les débits de ceux-ci, le circuit de formation de trame hertzienne FTH élève le débit du signal multiplex SMk relatif au groupe sélectionné de signaux plésiochrones et appliqué par le circuit de multiplexage et sélection sélectionné CMk dans un rapport constant RC avec le débit du signal SRk résultant de la formation de trame hertzienne, de sorte que le débit maximal des signaux résultants soit le débit constant DC = 41,732 Mbit/s dans le câble de transmission CA. Ainsi, le rapport RC est égal à 41,732/34,368 = 1,214, et les signaux résultant SR0 à SR3 pour les modes M0 à M3 ont les débits suivants DR0 à DR3 :

$$M0 \ (k=0) : DR0 = DC = 34,368 \times RC = 41,732 \text{ Mbit/s}$$

$$M1 \ (k=1) : DR1 = DC/2 = 17,184 \times RC = 20,886 \text{ Mbit/s}$$

$$M2 \ (k=2) : DR2 = DC/4 - 8,592 \times RC = 10,433 \text{ Mbit/s}$$

$$M3 \ (k=3) : DR3 = DC/8 = 4,296 \times RC = 5,216 \text{ Mbit/s}.$$

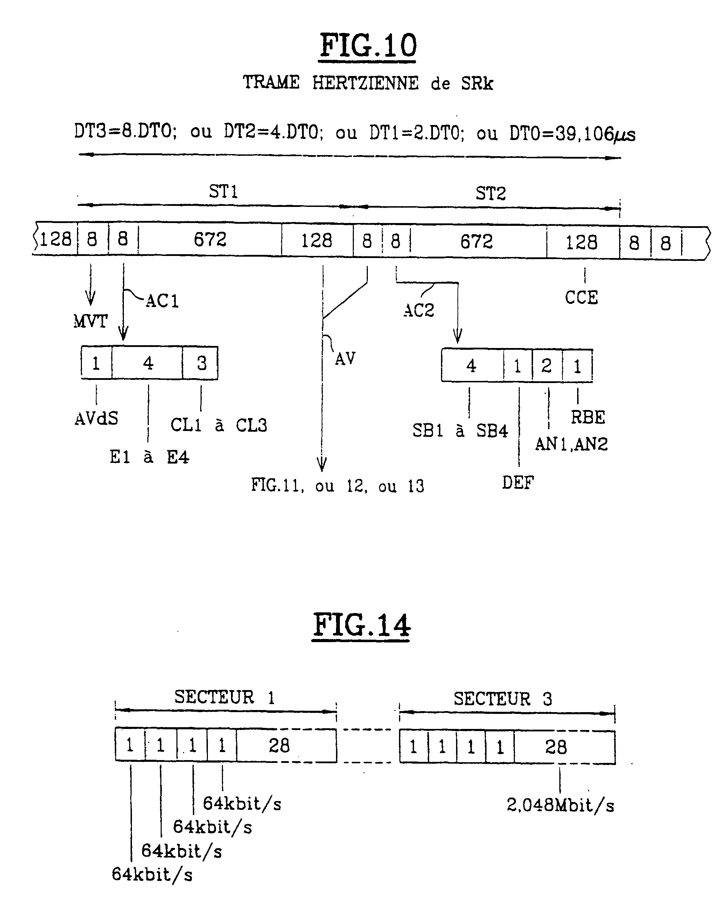

Quel que soit le signal multiplex SMk appliqué par l'un des circuits de multiplexage CM0 à CM3 au circuit de formation de trame hertzienne FTH, la trame du signal résultant respectif SRk a la structure commune de trame hertzienne montrée à la figure 10. La structure de la trame est conforme à la recommandation MPEG2 et a une longueur constante de 1632 bits, quel que soit le débit du signal résultant. La fréquence de la trame, ou bien la durée DT0 à DT3 de celle-ci comme montrée à la figure 10, varie en fonction du débit du signal résultant SR0 à SR3, et donc du débit du signal multiplex SM0 à SM3, et est égale à 25,571 kHz ; 12,785 kHz ; 6,392 kHz ; ou 3, 196 kHz. En outre, la largeur d'un bit dans la trame hertzienne est également fonction du débit du signal résultant SRk. Ces différences de largeur de bit sont compensées dans le circuit de suréchantillonnage SUR qui suréchantillonne le signal SRk avec un rapport d'échantillonnage $2^k$ de 1, 2, 4 et 8 afin que le débit du signal à la sortie de l'équipement ETR soit toujours égal au débit constant DC = 41,732 Mbit/s. Comme montré à la figure 1, la sortie de l'équipement ETR est celle de l'interface de câble IC1 qui code le signal résultant suréchantillonné SSURk par exemple en code bipolaire HDB3 et l'adapte aux caractéristiques du câble CA. Ainsi, un bit du signal SR1, SR2, ou SR3 est répété consécutivement 2, 4, ou 8 fois dans le signal SSUR1, SSUR2, ou SSUR3 au débit DC.

De manière similaire à une trame MPEG2, la trame modulaire montrée à la figure 10 est composée de deux secteurs ST1 et ST2 comprenant chacun 672 bits d'information utile correspondant aux bits du signal multiplex sélectionné SMk et 144 bits supplémentaires, soit une longueur de trame égale à 1632 bits. Le premier secteur ST1 comprend successivement 8 bits de mots de verrouillage de trame MVT, un premier champ d'affectation constante AC1 à 8 bits, 672 bits d'information utile, et 128 premiers bits d'un champ d'affectation variable AV. Le deuxième secteur S2 comprend successivement 8 derniers bits de champ d'affectation variable AV, un second champ d'affectation constante AC2 à 8 bits, 672 bits d'information utile, et un champ de code correcteur d'erreurs CCE à 128 bits, par exemple relatif à un code de Reed Solomon.

Le premier champ d'affectation constante AC1 comprend un bit d'appel de voie de service téléphonique AVdS, quatre bits d'informations d'erreurs E1 à E4 et trois bits libres CL1 à CL3.

Le bit AVdS à un état prédéterminé signale l'exploitation d'une voie de service téléphonique VdS, c'est-à-dire une communication en cours d'établissement ou établie dans la voie de service téléphonique VdS dont le champ utile est inclus dans le champ d'affectation variable AV et a une longueur inversement proportionnelle au débit du signal résultant SRk. La voie VdS assure le transfert des appels entre les équipements transmetteurs et récepteurs ETR de deux stations hertziennes en communication selon l'invention, et de préférence le transfert des appels entre l'équipement ETR considéré, installé à l'intérieur du bâtiment et l'équipement d'émission et de réception à radiofréquence ERA distant de plusieurs centaines de mètre. A travers la voie de service téléphonique, une communication téléphonique est établie par du personnel de service de maintenance par exemple, sans un quelconque autre système de transmission intermédiaire.

Les bits E1 à E4 sont réservés à la collecte d'informations d'erreurs fournies par un circuit de correction d'erreurs inclus dans le circuit CRE de l'équipement ERA. Ces bits sont des informations locales, significatives d'une trame comportant des erreurs corrigées ou non, et sont insérés dans la trame suivante. Les bits E1 à E4 sont traités en réception dans l'équipement ETR de la station hertzienne pour estimer le taux d'erreurs suivant le sens de transmission correspondant de la liaison hertzienne. Par exemple, les bits E1 à E4 indiquent qu'un octet erroné a été détecté et corrigé et qu'une trame comporte un nombre d'octets erronés supérieur à la capacité de correction du code de Reed Solomon, soit au moins 9 octets, et que ces octets ne peuvent par conséquent être corrigés. Lorsque la liaison hertzienne comporte deux canaux de transmission fonctionnant en secours l'un de l'autre, des paires de bits E1-E2 et E3-E4 sont assignées à chaque canal de transmission.

Les trois bits CL1 à CL3 restent libres pour être affectés à de nouveaux services.

Les huit bits dans le deuxième champ d'affectation constante AC2 sont affectés à la collecte d'informations nécessaires à l'élaboration de critères de qualité de la liaison entre les équipements des stations hertziennes. Ces bits supportent les informations suivantes :

- un mot de synchronisation de bloc à 4 bits SB1 à SB4, un bloc étant composé d'une ou plusieurs trames ;
- un bit de défaut DEF pour signaler une perte de verrouillage dans la trame précédente ;
- deux bits d'anomalies AN1 et AN2 pour respectivement signaler un viol de code sur le câble CA et un nombre minimal d'octets erronés dans la trame précédente ;
- un bit de retour de bloc erroné RBE correspondant au sens de réception contraire au sens d'émission de la station locale et indiquant la réception d'une trame porteuse d'une indication de trame non corrigée ou de trame comportant au moins un viol de code, ou à la réception d'une trame porteuse d'une indication de perte de verrouillage de trame distante, ou à la détection locale d'une perte de verrouillage de trame.

Toutes ces données sont insérées dans la trame qui suit celle où l'événement correspondant survient.

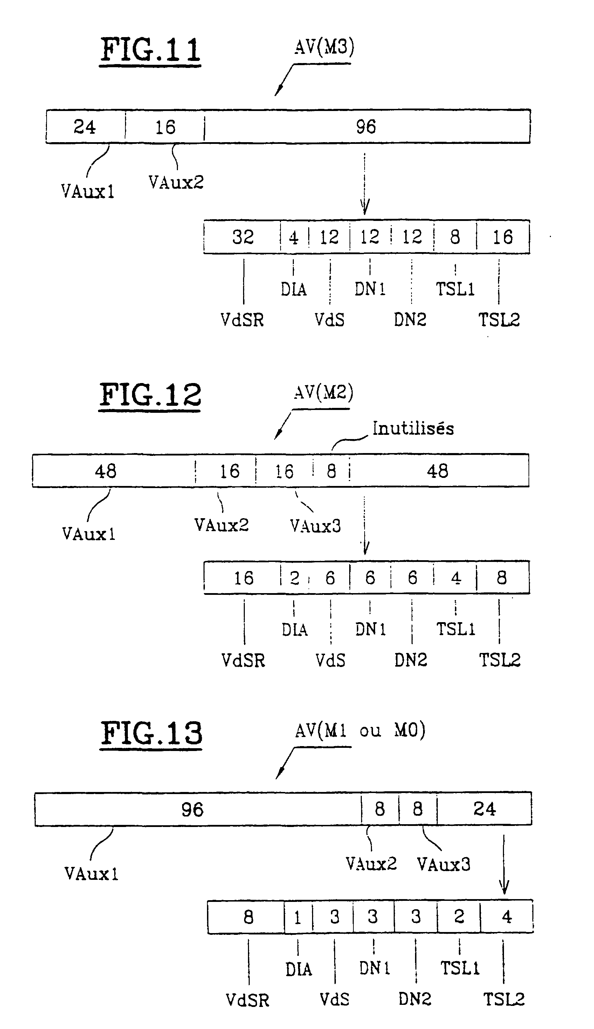

Les figures 11, 12 et 13 illustrent l'affectation des bits du champ d'affectation variable AV à 136 bits respectivement en fonction du mode M3, du mode M2 et du mode M1 ou M0.

Au début du champ AV, 40 bits en mode M3, ou 80 bits en mode M2, ou 112 bits en mode M1 ou M0, sont réservés respectivement à deux et trois voies auxiliaires VAux1 à VAux3 qui sont traitées dans un circuit de mise en forme de voies auxiliaires MFVA (figure 2) relié au circuit FTH en fonction du mode de fonctionnement sélectionné sous la commande de l'unité UC. Les données relatives aux voies auxiliaires sont transmises sous la forme de signaux série accompagnés d'un signal d'horloge correspondant et d'une information de synchronisation de trame. Le tableau 5 suivant indique un exemple de répartition de bits et de débits de transmission pour les voies auxiliaires. Pour le mode M2, huit bits sont inutilisés après les 16 bits de la voie VAux3. En fonction de leur utilisation, les signaux de voie auxiliaire peuvent être formatés en une trame auxiliaire dont la structure n'est pas prédéterminée par la trame hertzienne elle-même mais dépend seulement de l'application envisagée dans la limite des caractéristiques du tableau 5.

TABLEAU 5

|  | Mode (Mbit/s) | Fréquence trame (kHz) | Voie auxil. | Nbre bits | Débit (kbit/s) |
|---|---|---|---|---|---|
| M3 | 2 x 2 | 3,196 | VAux1 | 24 | 76,7 |
|  |  |  | VAux2 | 16 | 51,1 |
| M2 | 4 x 2 | 6,392 | VAux1 | 48 | 306,8 |
|  |  |  | VAux2 | 16 | 102,2 |
|  |  |  | VAux3 | 16 | 102,2 |
| M1 | 8 x 2 | 12,785 | VAux1 | 96 | 1227,4 |
|  |  |  | VAux2 | 8 | 102,2 |
|  |  |  | VAux3 | 8 | 102,2 |
| M0 | 16 x 2 | 25,571 | VAux1 | 96 | 2454,8 |
|  |  |  | VAux2 | 8 | 204,5 |
|  |  |  | VAux3 | 8 | 204,5 |

Selon le tableau 5, le débit maximum offert a une voie auxiliaire est augmenté au débit du signal résultant respectif dans le circuit MFVA et est égal au produit de la fréquence de trame hertzienne du signal résultant respectif par le nombre de bits disponibles pour la voie auxiliaire.

Les applications présentées ci-après sont uniquement basées sur la capacité de transmission de chaque voie auxiliaire et ne sont données qu'à titre d'exemple non limitatif.

Dans le mode M3, la voie auxiliaire VAux1 transmet un signal asynchrone à 9600 bit/s ou un signal à 64 kbit/s, et la voie VAux2 transmet un signal asynchrone à 9600 bit/s.

Dans le mode M2, la voie VAux1 achemine un signal à 256 kbit/s ou quatre signaux à 64 kbit/s, et les voies VAux2 et VAux3 acheminent chacune un signal à 64 kbit/s ou deux signaux asynchrones à 9600 bit/s ou un signal asynchrone à 19200 bit/s.

Dans le mode M1, le débit offert à la première voie auxiliaire VAux1 est ici nettement plus élevé que dans les modes précédents et permet de transmettre jusqu'à quatre signaux à 256 kbit/s. Dans le mode M1, les voies VAux2 et VAux3 transmettent chacune une voie à 64 kbit/s ou deux voies asynchrones à 9600 bit/s ou une voie asynchrone à 19200 bit/s.

Dans le mode M0, le débit offert à la première voie auxiliaire VAuxl est encore plus élevé. Il est utilisable pour transmettre un signal à 2,048 Mbit/s ainsi qu'un signal à 256 kbit/s ou quatre signaux à 64 kbit/s. Une structure de trame divisée en trois secteurs de 32 bits est montrée à la figure 14. Selon cet exemple, les quatre premiers bits de chaque secteur sont affectés respectivement aux quatre signaux à 64 kbit/s, ou affectés au signal à 256 kbit/s. Dans le mode M0, les voies VAux2 et VAux3 assurent chacune la transmission de deux signaux à 64 kbit/s, ou deux signaux asynchrones à 19200 bit/s par exemple.

Quel que soit le mode considéré, les signaux numériques sont traités dans le circuit MFVA en augmentant leurs débits en fonction des caractéristiques de la voie auxiliaire respective. Les signaux asynchrones typiquement de 4800 à 19200 bit/s sont transmis par suréchantillonnage à au moins 5 fois leur débit nominal. Les voies à 64 kbit/s ou 256 kbit/s sont transmises par paquets. La voie à 2048 kbit/s, transmissible uniquement en mode M0 (16 x 2 Mbit/s), est traitée comme un signal plésiochrone entrant. Elle est insérée dans la trame auxiliaire après synchronisation sur le rythme de celle-ci par justification positive.

Toujours en référence aux figures 11 à 13, le champ d'affectation variable AV dans la trame hertzienne comprend 32, 16 ou 8 bits en mode M3, M2, ou M1, M0 réservés à une voie de service téléphonique de réseau VdSR à 64 kbit/s. Puis 4, 2 ou 1 bit sont affectés à une voie DIA pour le dialogue entre l'unité de commande UC dans l'équipement ETR et le microcontrôleur MC dans l'équipement ERA. Le dialogue comprend, dans le sens émission ETR vers ERA, la "montée" de télécommandes telles que changement de groupe de signaux plésiochrones et caractéristiques relatifs au groupe sélectionné, réglage de puissance, et dans le sens réception ERA vers ETR, la "descente" d'indications d'états ou de défauts tels que changement de groupe, alarmes, état de commutation, niveau de champ radioélectrique reçu.

Ensuite, 12, 6 ou 3 bits sont assignés à la voie de service téléphonique VdS pour établir une communication audio entre les deux stations de la liaison hertzienne, ou entre les équipements ETR et ERA dans la station hertzienne. Les appels associés sont signalés par les bits AVdS.

12, 6 ou 3 bits au maximum sont ensuite offerts à chacune de deux voies de données numériques DN1 et DN2 dans le champ AV. Chaque voie DN1, DN2 transmet par suréchantillonnage par exemple un signal asynchrone à 9600 bit/s.

Enfin, 8, 4 ou 2 et 16, 8 ou 4 bits sont réservés respectivement à deux voies de télésurveillance longitudinale TSL1 et TSL2 qui assurent un dialogue entre des équipements dans une même liaison. La voie TSL1 est exploitée pour la gestion de la liaison hertzienne point à point et la voie TSL2 est utilisée dans le cadre de la gestion de réseau.

En se référant à nouveau à la figure 1, le signal suréchantillonné codé SSUk à 41,732 Mbit/s transmis par l'interface de câble IC1 dans le câble coaxial CA est décodé dans l'interface de câble IC2 de l'équipement à radiofréquence ERA. Le circuit de sous-échantillonnage SOE détecte chaque groupe de 2 bits consécutifs dans le signal suréchantillonné décodé, c'est-à-dire chaque groupe de 1, 2, 4 ou 8 bits pour le mode de fonctionnement M0, M1, M2 ou M3, de manière à signaler le rapport de suréchantillonnage $2^k$ au microcontrôleur MC et ainsi sous-échantillonner le signal transmis à travers le câble CA avec un rapport $1/2^k$ pour restituer le signal résultant SRk au circuit d'émission à haute fréquence CEM à travers le filtre numérique FIE.

En fonction du rapport de suréchantillonnage 2k et donc du mode de fonctionnement Mk, le microcontrôleur MC programme le filtre numérique d'émission FIE en bande de base. Les largeurs de bande du filtre programmé sont compatibles avec le débit DRk du signal résultant restitué SRk correspondant au mode sélectionné Mk. Dans le circuit CEM, le signal ainsi filtré module une porteuse à fréquence intermédiaire qui est ensuite transposée en haute fréquence.

A la réception, un signal à trame numérique hertzienne au débit DRk selon l'invention est traité selon des opérations sensiblement réciproques de celles décrites en détail ci-dessus pour l'émission d'un tel signal.

Dans l'équipement à radiofréquence ERA, le signal à trame hertzienne reçu est amplifié, transposé et démodulé en un signal en bande de base dans le circuit de réception à haute fréquence CRE. En particulier le signal reçu est filtré par des filtres de fréquence sélectionnés dans une batterie de filtres commutables dans le circuit CRE par le microcontrôleur MC en fonction du mode de fonctionnement Mk. Le signal reçu en bande de base est alors filtré selon le mode de fonctionnement Mk par un filtre numérique programmable inclus dans le circuit de démodulation et filtrage numérique FIR. Puis, le signal reçu en bande de base est suréchantillonné dans le circuit de suréchantillonnage SUE en fonction du rapport $2^k$ pour transmettre un signal numérique au débit DC = 41,732 Mbit/s dans le câble coaxial CA, codé à travers l'interface de câble IC2.

Après décodage dans l'interface de câble IC1 dans l'équipement transmetteur et récepteur ETR, le dispositif de démultiplexage DMUX sous-échantillonné le signal reçu à travers le câble CA en un signal numérique résultant au débit DRk en fonction du rapport d'échantillonnage $2^k$ relatif au mode de fonctionnement Mk signalé par l'unité de commande UC. Puis, le signal résultant reçu est déformaté de manière à restituer un signal multiplex SMk. Les bits des champs AC1, AC2, AV et CCE dans la trame (figure 10) du signal résultant sont pour partie traités par l'unité de commande UC pour notamment détecter des erreurs et générer des signaux d'alarme et pour partie dirigées vers les diverses voies VAux1 à VAux3, VdSR, VdS, DN1 et DN2. Le signal multiplex restitué est enfin démultiplexé dans un circuit de démultiplexage sélectionné par l'unité de commande UC parmi des circuits de démultiplexage ayant des architectures similaires aux circuits de multiplexage CM0 à CM3 (figures 3 à 6). Le circuit de démultiplexage fournit, à travers des circuits de transcodage HDB3, des signaux composants plésiochrones correspondant au groupe sélectionné.

De la description qui précède, il apparaît que l'invention porte sur une trame numérique constituée d'un nombre de bits constant, c'est-à-dire ayant une longueur prédéterminée dont l'intérêt réside principalement dans les possibilités :

a) de transmettre (ou encapsuler) dans la même structure de trame des signaux résultants ayant des débits différents et qui résultent du multiplexage de signaux plésiochrones composants pouvant avoir eux-mêmes des débits différents ;

b) d'adapter le débit dans le câble de transmission intermédiaire au débit réel à transmettre compte tenu des débits des signaux plésiochrones le constituant ; et

c) de transmettre des données supplémentaires de service (et d'exploitation), en réservant à certaines données un débit minimal, voire même constant entre les différents modes possibles, simultanément à la transmission des signaux plésiochrones composants.

## Revendications

**1.** Trame numérique ayant une longueur prédéterminée résultant du multiplexage de signaux numériques plésiochrones, **caractérisée par** une longueur constante et une structure indépendantes des débits (DE3, DE3/2, DE3/4, DE3/8) de signaux (SR0 à SR3) résultant chacun du multiplexage de signaux numériques plésiochrones constituant un groupe sélectionné parmi plusieurs groupes (M0 à M3) de signaux numériques plésiochrones (SE1, SE2, SE3) ayant des débits (DE1, DE2, DE3) sensiblement multiples entre eux, les débits des signaux résultants (SR0 à SR3) étant des sous-multiples du plus grand débit (DC) des signaux résultants.

2. Trame numérique conforme à la revendication 1, comprenant un mot de verrouillage (MVT), un champ de bits de signaux multiplexés et un champ de bits supplémentaires (AC1, AV, AC2, CCE) ayant des longueurs respectives prédéterminées, le rapport (RC) des débits du signal résultant (SRk) comportant la trame et d'un signal multiplex sélectionné (SMk) obtenu sensiblement directement par multiplexage des signaux plésiochrones du groupe sélectionné étant constant et indépendant des débits des signaux multiplex.

3. Trame conforme à la revendication 2, dans laquelle le champ de bits supplémentaires comprend un champ d'affectation constante (AC1, AC2), un champ d'affectation (AV) variable en fonction du debit (DE3/$2^k$) du signal multiplex sélectionné (SMk), et un champ de code correcteur d'erreurs (CCE), lesdits champs ayant des longueurs respectives prédéterminées.

4. Trame conforme à la revendication 3, dans laquelle le champ d'affectation constante comprend des bits de collecte d'informations d'erreurs (E1-E4) et/ou des bits de qualité (AC2).

5. Trame conforme à la revendication 3 ou 4, dans laquelle le champ d'affectation variable (AV) comprend des bits de voies auxiliaires (VAux1 à VAux3) dont les débits offerts sont d'autant plus élevés que le débit du signal multiplex sélectionné (SMk) est élevé.

6. Trame conforme à l'une quelconque des revendications 3 à 5, dans laquelle le champ d'affectation variable (AV) comprend des bits (VSdR, DIA, VdS, DN1, DN2, TLS1, TLS2) qui sont réservés à un nombre prédéterminé de voies de transmission téléphonique et/ou de données et qui sont en nombre d'autant plus faible que le débit du signal multiplex sélectionné (SMk) est élevé.

7. Trame conforme à l'une quelconque des revendications 3 à 6, dans laquelle le champ d'affectation variable (AV) comprend des bits assignés à une voie de service téléphonique (VdS) qui sont en nombre d'autant plus faible que le débit du signal multiplex sélectionné (SMk) est élevé, et le champ d'affectation constante (AC1, AC2) comprend un bit (AVdS) signalant un appel dans la voie de service téléphonique.

8. Procédé pour former une trame numérique conforme à l'une quelconque des revendications 1 à 7, **caractérisé par** les étapes suivantes :

   - constituer des groupes de signaux numériques plésiochrones parmi plusieurs signaux numériques plésiochrones donnés (SE1, SE2, SE3) ayant des débits (DR1, DR2, DR3) sensiblement multiples entre eux,
   - sélectionner l'un des groupes de signaux numériques plésiochrones,
   - multiplexer les signaux numériques plésiochrones dans le groupe sélectionné en un signal multiplex sélectionné (SMk), les signaux multiplex (SM0 à SM3) résultant respectivement du multiplexage des signaux numériques plésiochrones dans les groupes ayant des débits multiples entre eux,
   - répartir les bits du signal multiplex sélectionné (SMk) dans un champ de longueur prédéterminée dans la trame après multiplication du débit du signal multiplex sélectionné par une constante (RC), et
   - former un signal résultant (SRk) ayant ladite trame par insertion dans celle-ci d'un mot de verrouillage (MVT) et d'un champ de bits supplémentaires (AC1, AC2, AV) ayant des longueurs prédéterminées.

9. Procédé conforme à la revendication 8, selon lequel le débit du signal résultant (SRk) est au plus égal au débit (DC) dans un support de transmission (CA), et comprenant une étape de suréchantillonner le signal résultant (SRk) avec un rapport de suréchantillonnage ($2^k$) entre le débit de support de transmission (DC) et le débit du signal résultant (DRk) de manière à transmettre un signal suréchantillonné (SSURk) audit débit constant (DC).

10. Procédé conforme à la revendication 9, comprenant une étape de sous-échantillonner le signal résultant suréchantillonné (SSURk) avec l'inverse du rapport de suréchantillonnage ($2^k$) et une étape de sélectionner des filtres de fréquence (CEM) en fonction du rapport de suréchantillonnage, dans un équipement d'émission et de réception à radiofréquence (ERA) d'une station hertzienne relié à un équipement transmetteur et récepteur (ETR) situé à la base de la station hertzienne à travers le support de transmission (CA) et mettant en oeuvre les étapes énoncées dans la revendication 8 ou 9.

**11.** Procédé conforme à l'une quelconque des revendications 8 à 10, selon lequel, lorsque les débits DE1 et DE2 de premiers et deuxièmes signaux numériques plésiochrones (SR1, SR2) sont liés par la relation DE2 ≈ N.DE1, et des signaux multiplex (SM0 à SM2) ont des débits sensiblement supérieurs à P.DE2, N et P étant des entiers égaux ou supérieurs à zéro, les étapes de sélectionner un groupe et multiplexer des signaux numériques plésiochrones dans le groupe sélectionné comprennent des étapes de sélectionner et multiplexer $N(2^{K-k}-P)$ signaux au débit DE1 en $(2^{K-k}-P)$ signaux multiplex intermédiaires au débit DE2, sélectionner P signaux numériques plésiochrones au débit DE2, et multiplexer les P signaux numériques plésiochrones sélectionnés au débit DE2 et les $(2^{K-k}-P)$ signaux multiplex intermédiaires en le signal multiplex sélectionné (SMk), P étant un entier compris entre 0 et $2^{(K-k)}$ et k un entier compris entre 0 et K.

**12.** Procédé conforme à l'une quelconque des revendications 8 à 11, selon lequel l'insertion du champ de bits supplémentaires dans la trame comprend des insertions d'un champ d'affectation constante (AC1, AC2), d'un champ d'affectation (AV) variable en fonction du débit du signal multiplex sélectionné, et d'un champ de code correcteur d'erreurs (CCE), lesdits champs ayant des longueurs respectives prédéterminées.

**Claims**

**1.** A digital frame having a predetermined length resulting from multiplexing plesiochronous digital signals, **characterized by** a constant length and a structure independent of the bit rates (DE3, DE3/2, DE3/4, DE3/8) of signals (SR0 to SR3) each resulting from multiplexing plesiochronous digital signals constituting a group selected from several groups (M0 to M3) of plesiochronous digital signals (SE1, SE2, SE3) having bit rates (DE1, DE2, DE3) which are substantially multiples of each other, the bit rates of the resulting signals (SR0 to SR3) being submultiples of the highest bit rate (DC) of the resulting signals.

**2.** A digital frame according to claim 1, comprising a frame alignment word (MVT), a multiplexed signal bit field and an additional bit field (AC1, AV, AC2, CCE) having respective predetermined lengths, the ratio (RC) of the bit rates of the resulting signal (SRk) including the frame and a selected multiplex signal (SMk) obtained substantially directly by multiplexing plesiochronous signals of the selected group being constant and independent of the bit rates of the multiplex signals.

**3.** A frame according to claim 2, wherein the additional bit field includes a constant allocation field (AC1, AC2), a variable allocation field (AV) varying as a function of the bit rate ($DE3/2^k$) of the selected multiplex signal (SMk), and an error correcting code field (CCE), said fields having respective predetermined lengths.

**4.** A frame according to claim 3, wherein the constant allocation field includes bits for collecting error information (E1-E4) and/or quality bits (AC2).

**5.** A frame according to claim 3 or 4, wherein the variable allocation field (AV) includes bits of auxiliary channels (VAux1 to VAux3) whose bit rates increase as the bit rate of the selected multiplex signal (SMk) increases.

**6.** A frame according to any one of claims 3 to 5, wherein the variable allocation field (AV) includes bits (VSdR, DIA, VdS, DN1, DN2, TLS1, TLS2) which are reserved for a predetermined number of telephone and/or data transmission channels and whose number decreases as the bit rate of the selected multiplex signal (SMk) increases.

**7.** A frame according to any one of claims 3 to 6, wherein the variable allocation field (AV) includes bits allocated to a telephone service channel (VdS) whose number decreases as the bit rate of the selected multiplex signal (SMk) increases, and the constant allocation field (AC1, AC2) includes a bit (AVdS) indicating a call request on the telephone service channel.

**8.** A method of forming a digital frame, according to any one of claims 1 to 7, **characterized by** the following steps :

- constituting groups of plesiochronous digital signals from several given plesiochronous digital signals (SE1, SE2, SE3) having bit rates (DR1, DR2, DR3) which are substantially multiples of each other,
- selecting one of the plesiochronous digital signal groups,
- multiplexing the plesiochronous digital signals of the selected group into a selected multiplex signal (SMk), the multiplex signals (SM0 to SM3) respectively resulting from the multiplexing of the plesiochronous digital signals in the groups having bit rates which are multiples of each other,

- distributing the bits of the selected multiplex signal (SMk) in a field of predetermined length in the frame after multiplication of the bit rate of the selected multiplex signal by a constant (RC), and

- forming a resulting signal (SRk) having said frame by inserting therein a frame alignment word (MVT) and an additional bit field (AC1, AC2, AV) having predetermined lengths.

9. A method according to claim 8, wherein the bit rate of the resulting signal (SRk) is at most equal to the bit rate (DC) on a transmission medium (CA), and comprising a step of oversampling the resulting signal (SRk) with an oversampling ratio ($2^k$) between the bit rate of the transmission medium (DC) and the bit rate of the resulting signal (DRk) so as to transmit an oversampled resulting signal (SSURk) at said constant bit rate (DC).

10. A method according to claim 9, comprising a step of undersampling the oversampled resulting signal (SSURK) with the reciprocal of the oversampling ratio ($2^k$) and a step of selecting frequency filters (CEM) as a function of the oversampling ratio, in a radio transceiver equipment (ERA) of a radio station connected to a transceiver equipment (ETR) situated at the base of the radio station through the transmission medium (CA) and carrying out the steps stated in claim 8 or 9.

11. A method according to any one of claims 8 to 10, wherein, if the bit rates DE1 and DE2 of first and second plesiochronous digital signals (SR1, SR2) are related by the equation $DE2 \approx N.DE1$, and multiplex signals (SM0 to SM2) have bit rates significantly greater than P.DE2, N and P being integers not less than 0, the steps of selecting one group and multiplexing the plesiochronous digital signals in the selected group comprise steps of selecting and multiplexing $N(2^{K-k}-P)$ signals at the bit rate DE1 into $(2^{K-k}-P)$ intermediate multiplex signals at the bit rate DE2, selecting P plesiochronous digital signals at the bit rate DE2, and multiplexing the P selected plesiochronous digital signals at the bit rate DE2 and the $(2^{K-k}-P)$ intermediate multiplex signals into the selected multiplex signal (SMk), P being an integer in the range from 0 to $2^{(K-k)}$ and k being an integer in the range from 0 to K.

12. A method according to any one of claims 8 to 11, wherein inserting of the additional bit field into the frame includes inserting a constant allocation field (AC1, AC2), a variable allocation field (AV) varying as a function of the bit rate of the selected multiplex signal, and an error correcting code field (CCE), said fields having respective predetermined lengths.

**Patentansprüche**

1. Digitaler Datenübertragungsblock mit einer vorbestimmten Länge, der aus dem Multiplexen plesiochroner, digitaler Signale resultiert, **gekennzeichnet durch** eine konstante Länge und eine Struktur, die unabhängig sind von den Datenübertragungsraten (DE3, DE3/2, DE3/4, DE3/8) von Signalen (SR0 bis SR3), die jeweils aus dem Multiplexen von plesiochronen, digitalen Signalen resultieren, die eine Gruppe bilden, die aus mehreren Gruppen (M0 bis M3) plesiochroner, digitaler Signale (SE1, SE2, SE3) mit Datenübertragungsraten (DE1, DE2, DE3), die im Wesentlichen Vielfache voneinander sind, ausgewählt wird, wobei die Datenübertragungsraten der resultierenden Signale (SR0 bis SR3) Bruchteile der größten Datenübertragungsrate (DC) der resultierenden Signale sind.

2. Digitaler Datenübertragungsblock nach Anspruch 1, mit einem Sperrwort (MVT), einem Feld für Bits gemultiplexter Signale und einem Feld für zusätzliche Bits (AC1, AV, AC2, CCE) mit jeweils vorbestimmten Längen, wobei das Verhältnis (RC) der Datenübertragungsraten des resultierenden Signals (SRk), das den Datenübertragungsblock aufweist, und eines ausgewählten Multiplexsignals (SMk), das im Wesentlichen direkt durch Multiplexen der plesiochronen Signale der ausgewählten Gruppe erhalten wird, konstant und unabhängig von den Datenübertragungsraten der Multiplexsignale ist.

3. Datenübertragungsblock nach Anspruch 2, bei dem das Feld zusätzlicher Bits ein Feld konstanter Zuordnung (AC1, AC2), ein Feld mit in Abhängigkeit von der Datenübertragungsrate ($DE3/2^k$) des ausgewählten Multiplexsignals (SMk) variabler Zuordnung (AV) und ein Fehlerkorrekturkodefeld (CCE) umfasst, wobei die Felder jeweils vorbestimmte Längen aufweisen.

4. Datenübertragungsblock nach Anspruch 3, bei dem das Feld konstanter Zuordnung Fehlerinformationssammel-Bits (E1-E4) und/oder Gütebits (AC2) umfasst.

**5.** Datenübertragungsblock nach Anspruch 3 oder 4, bei dem das Feld variabler Zuordnung (AV) Bits von Zusatzpfaden (VAuxl bis VAux3) umfasst, deren angebotene Datenübertragungsraten umso höher sind, je höher die Datenübertragungsrate des ausgewählten Multiplexsignals (SMk) ist.

**6.** Datenübertragungsblock nach einem der Ansprüche 3 bis 5, bei dem das Feld variabler Zuordnung (AV) Bits (VSdR, DIA, VdS, DN1, DN2, TLS1, TLS2) umfasst, die für eine vorbestimmte Anzahl von Telefon- und/oder Datenübertragungspfaden reserviert sind und die zahlenmäßig umso gering sind, je höher die Datenübertragungsrate des ausgewählten Multiplexsignals (SMk) ist.

**7.** Datenübertragungsblock nach einem der Ansprüche 3 bis 6, bei dem das Feld variabler Zuordnung (AV) Bits umfasst, die einem Telefondienstpfad (VdS) zugeordnet sind und deren Zahl umso geringer ist, je höher die Datenübertragungsrate des ausgewählten Multiplexsignals (SMk) ist, und das Feld konstanter Zuordnung (AC1, AC2) ein Bit (AVdS) umfasst, das einen Anruf auf dem Telefondienstpfad signalisiert.

**8.** Verfahren zum Ausbilden eines digitalen Datenübertragungsblocks nach einem der Ansprüche 1 bis 7, **gekennzeichnet durch** die folgenden Schritte:

- Zusammenstellen von Gruppen plesiochroner, digitaler Signale aus mehreren gegebenen plesiochronen, digitalen Signalen (SE1, SE2, SE3) mit Datenübertragungsraten (DR1, DR2, DR3), die im Wesentlichen Vielfache voneinander sind,
- Auswählen einer der Gruppen von plesiochronen, digitalen Signalen,
- Multiplexen der plesiochronen,.digitalen Signale in der ausgewählten Gruppe in ein ausgewähltes Multiplexsignal (SMk), wobei die Multiplexsignale (SM0 bis SM3) jeweils aus dem Multiplexen der plesiochronen, digitalen Signale in den Gruppen die Vielfache voneinander sind, resultieren,
- Verteilen der Bits des ausgewählten Multiplexsignals (SMk) in einem Feld vorbestimmter Länge in dem Datenübertragungsblock nach der Multiplikation der Datenübertragungsrate des ausgewählten Multiplexsignals mit einer Konstanten (RC), und
- Ausbilden eines resultierenden, den Datenübertragungsblock aufweisenden Signals (SRk) **durch** Einsetzen eines Sperrworts (MVT) und eines Feldes zusätzlicher Bits (AC1, AC2, AV) mit vorbestimmten Längen in den Datenübertragungsblock.

**9.** Verfahren nach Anspruch 8, gemäß dem die Datenübertragungsrate des resultierenden Signals (SRk) zumindest gleich der Datenübertragungsrate (DC) in einem Übertragungsträger (CA) ist, und mit einem Schritt des Überabtastens des resultierenden Signals (SRk) mit eine Überabtastverhältnis ($2^k$) zwischen der Datenübertragungsrate des Übertragungsträgers (DC) und der Datenübertragungsrate des resultierenden Signals (DRk), um ein überabgetastetes Signal (SSURk) mit der konstante Datenübertragungsrate (DC) zu übertragen.

**10.** Verfahren nach Anspruch 9, mit einem Schritt des Unterabtastens des resultierenden, überabgetasteten Signals (SSURk) mit dem Inversen des Überabtastverhältnisses ($2^k$) und einem Schritt des Auswählens der Frequenzfilter (CE) in Abhängigkeit von dem Überabtastverhältnis in einem Hochfrequenzsende- und -empfangsgerät (ERA) einer Funkstation, das mit einem in der Basis der Funkstation gelegenen Send- und Empfangsgerät (ETR) über den Übertragungsträger (CA) verbunden ist und das die in den Ansprüchen 8 oder 9 genannten Schritte einsetzt.

**11.** Verfahren nach einem der Ansprüche 8 bis 10, gemäß dem, wenn die Datenübertragungsraten DE1 und DE2 von ersten und zweiten plesiochronen, digitalen Signalen (SR1, SR2) durch die Beziehung DE2 $\approx$ N.DE1 verknüpft sind und Multiplexsignale (SM0 bis SM2) Datenübertragungsraten aufweisen, die im Wesentlichen größer als P. DE2 sind, wobei N und P ganze Zahlen gleich oder größer Null sind, die Schritte des Auswählens einer Gruppe und des Multiplexens plesiochroner digitaler Signale in der ausgewählten Gruppe die Schritte des Auswählens und Multiplexens von N($2^{K-k}$-P) Signalen mit der Datenübertragungsrate DE1 in ($2^{K-k}$-P) Zwischenmultiplexsignale mit der Datenübertragungsrate DE2, das Auswählen von P plesiochronen, digitalen Signalen mit der Datenübertragungsrate DE2 und das Multiplexen der P plesiochronen, digitalen Signale mit der Datenübertragungsrate DE2 und der ($2^{K-k}$-P) Zwischenmultiplexsignale in das ausgewählte Multiplexsignal (SMk), wobei P eine ganze Zahl zwischen 0 und $2^{(K-k)}$ und k eine ganze Zahl zwischen 0 und K ist.

**12.** Verfahren nach einem der Ansprüche 8 bis 11, gemäß dem das Einsetzen des Feldes zusätzlicher Bits in den Datenübertragungsblock das Einsetzen eines Feldes konstanter Zuordnung (AC1, AC2), eines Feldes mit in Abhängigkeit von der Datenübertragungsrate des ausgewählten Multiplexsignals variabler Zuordnung (AV) und eines Fehlerkorrekturkodefeldes (CCE) umfasst, wobei die Felder jeweils vorbestimmte Längen aufweisen.

# FIG.1

ERA

AN

EMISSION-RECEPTION
RADIOFREQUENCE

DUPLEXEUR

CRE

MODULATION
EMISSION — CEM

DU

RECEPTION
FILTRES

MC

FILTRE
NUMERIQUE — FIE

MICRO-
CONTROLEUR

DEMODULATION
FILTRAGE NUMERIQUE

SRk

FIR

$2^k$

SOUS-
ECHANTILLONNAGE

SUR-
ECHANTILLONNAGE

SOE

IC2

SUE

INTERFACE
CABLE

CA

DC=41,732 Mbit/s

ETR

INTERFACE
CABLE

TRANSMETTEUR-RECEPTEUR

SSURk

IC1

UC

DMUX

MUX

DISPOSITIF DE
MULTIPLEXAGE
(FIG.2)

UNITE DE
COMMANDE

DISPOSITIF DE
DEMULTIPLEXAGE

SC1,SC2,SC3

SR1,SR2,SR3

# FIG.2

Vers IC1

SSURk
(DC=41,732Mbit/s)

MUX

CIRCUIT DE
SURECHANTILLONNAGE

$\times 2^k$

SUR
de UC

Signaux
séries

MFVA

MISE EN FORME
VOIE AUXIL.

VAux 1
à VAux 3

SRk(DRk=DC/$2^k$)

VdSR
VdS
DN1,DN2

CIRCUIT DE
FORMATION DE
TRAME HERTZIENNE

$\times$RC

de UC
DIA
TSL1,TSL2

FTH

SMk(DE3/$2^k$)sélectionné

CIRCUIT DE
MULTIPLEXAGE
ET SELECTION
(FIG.3 à 6)

EO4
de UC

CM

SE1       SE2       SE3

CIRCUITS DE
DECODAGE ET
RECUPERATION
D'HORLOGE

CDR

SC1(DE1)       SC2       SC3
                (DE2)    (DE3)

## FIG.3

DE1=2,048Mbit/s          MX3                                    CM3                    SM3
                                                                                    (4,296Mbit/s)

SE1 → [MULTIPLEXEUR] ─────────────────────────────────→ ⊃ →→
SE1 →
                                                                          de UC   ES3

## FIG.4

DE1=2,048Mbit/s  MX1    DE2=8,448Mbit/s              CM2

                                            E2            MX4         SM2
4×SE1 → [MULTIPLEXEUR] ─o─→ ⊃ ──→ [MULTIPLEXEUR] ─→ ⊃ →→   (8,592Mbit/s)
SE2 ──────────────────────→
                    de UC                                      de UC   ES2

## FIG.5

4×2,048Mbit/s  MX1     DE2=8,448Mbit/s              CM1

4×SE1 ─o─→ [MULTIPLEXEUR] ─o─→ ⊃ E10       MX5        SM1
                                                     (17,184Mbit/s)
4×SE1 ───→ [MULTIPLEXEUR] ──→ ⊃ E11  [MULTIPLEXEUR] ─→ ⊃ →→
SE2 ────────────────────────→
SE2 ────────────────────────→
                    de UC                              de UC   ES1

## FIG.6

MX1        DE2=8,448Mbit/s              CM0

                              E00          MX2         SM0
4×SE1 ─→ [MULTIPLEXEUR] ─o─→ ⊃ ──────→                (DE3=34,368
                                                        Mbit/s)
4×SE1 ─→ [MULTIPLEXEUR] ──→ ⊃ E01 ──→ [MULTIPLEXEUR] ─→ ⊃ →→
4×SE1 ─→ [MULTIPLEXEUR] ──→ ⊃ E02 ──→
4×SE1 ─→ [MULTIPLEXEUR] ──→

SE2 ────────────────────→ ⊃ E03
SE2 ────────────────────→
SE2 ────────────────────→
SE2 ──────────o─────────→                              ESO
                                                        de UC
        8,448Mbit/s
                         de UC

# FIG.7

Trame de SM3 à 4,296Mbit/s

| SECTEUR 1 | SECTEUR 2 | | SECTEUR 4 |

| 2 | 1 | 1 | 86 | 2 | 1 | 1 | 86 | | 2 | 1 | 1 | 86 |

MV IJ IJ BJ BJ   MV IJ IJ   MV IJ IJ

# FIG.8

Trame de SM2 à 8,592Mbit/s

| SECTEUR 1 | SECTEUR 2 | | SECTEUR 4 |

| 2 | 1 | 1 | 248 | 2 | 1 | 1 | 248 | | 2 | 1 | 1 | 248 |

MV IJ SS BJ BJ   MV IJ SS   MV IJ SS

# FIG.9

Trame de SM1 à 17,184Mbit/s

| SECTEUR 1 | SECTEUR 2 | | SECTEUR 4 |

| 2 | 1 | 1 | 248 | 2 | 1 | 1 | 248 | | 2 | 1 | 1 | 248 |

MV IJ IJ BJ BJ   MV IJ IJ   MV IJ IJ

# FIG.10

### TRAME HERTZIENNE de SRk

DT3=8.DT0; ou DT2=4.DT0; ou DT1=2.DT0; ou DT0=39,106$\mu$s

| ST1 | | | | ST2 | | | | | |
|---|---|---|---|---|---|---|---|---|---|
| 128 | 8 | 8 | 672 | 128 | 8 | 8 | 672 | 128 | 8 | 8 |

MVT — AC1 — AV — AC2 — CCE

| 1 | 4 | 3 |
|---|---|---|

AVdS — E1 à E4 — CL1 à CL3

FIG.11, ou 12, ou 13

| 4 | 1 | 2 | 1 |
|---|---|---|---|

SB1 à SB4 — DEF — AN1,AN2 — RBE

# FIG.14

| SECTEUR 1 | | | | | SECTEUR 3 | | | | |
|---|---|---|---|---|---|---|---|---|---|
| 1 | 1 | 1 | 1 | 28 | 1 | 1 | 1 | 1 | 28 |

64kbit/s
64kbit/s
64kbit/s
64kbit/s
2,048Mbit/s

## FIG.11

AV(M3)

| 24 | 16 | 96 |
|---|---|---|

VAux1  VAux2

| 32 | 4 | 12 | 12 | 12 | 8 | 16 |
|---|---|---|---|---|---|---|

DIA   DN1   TSL1

VdSR   VdS   DN2   TSL2

## FIG.12

AV(M2)

Inutilisés

| 48 | 16 | 16 | 8 | 48 |
|---|---|---|---|---|

VAux1   VAux2   VAux3

| 16 | 2 | 6 | 6 | 6 | 4 | 8 |
|---|---|---|---|---|---|---|

DIA   DN1   TSL1

VdSR   VdS   DN2   TSL2

## FIG.13

AV(M1 ou M0)

| 96 | 8 | 8 | 24 |
|---|---|---|---|

VAux1   VAux2   VAux3

| 8 | 1 | 3 | 3 | 3 | 2 | 4 |
|---|---|---|---|---|---|---|

DIA   DN1   TSL1

VdSR   VdS   DN2   TSL2